# DEMANDE DE BREVET EUROPEEN

(11) **EP 1 413 779 A1**
(43) Date de publication de la demande: **28.04.2004**
(21) Numéro de dépôt: 02292602.6
(22) Date de dépôt: 21.10.2002
(51) Int. Cl.: F16B 47/00, A01K 27/00

(54) **Dispositif pour attacher un animal**

(71) Demandeur: Morisse, Eric, 76400 Toussaint (FR)
(72) Inventeur: Morisse, Eric, 76400 Toussaint (FR)
(74) Mandataire: Thibon-Littaye, Annick

(57) **Abrégé**

Le dispositif pour attacher un animal suivant l'invention comporte un crochet (6) de retenue de la poignée d'une laisse d'un animal et des moyens de fixation (2) du crochet (6) sur une paroi lisse, notamment par dépression. Le crochet (6) de retenue est avantageusement réalisé en colimaçon de telle manière que la poignée de la laisse d'un animal s'y insère sans avoir à utiliser un élément supplémentaire tel qu'un mousqueton. Avantageusement, les moyens de fixation (2) sont essentiellement constitués par une ventouse (21) associée à un mécanisme de commande par basculement d'un levier (5) comportant préférentiellement un verrou (7) de blocage du mouvement de basculement du levier.

## Description

La présente invention concerne la conception et la réalisation de dispositifs qui permettent d'attacher la poignée de la laisse d'un animal et qui se fixent à l'entrée de lieux où l'accès des animaux est interdit.

Dans certains lieux fermés tels que les commerces et même dans certains lieux publics ouverts, tels que les parcs publics, les animaux ne sont pas toujours acceptés. Il est alors fréquent de les trouver attachés à un poteau à l'entrée de ces lieux. Pour ce faire, les maîtres utilisent la laisse de l'animal qu'ils entourent autour du poteau et qu'ils maintiennent en faisant un noeud ou en utilisant un élément supplémentaire tel qu'un mousqueton. Il est en effet très fréquent d'utiliser ce genre d'élément supplémentaire offrant une sécurité plus importante qu'un simple noeud qui, bien souvent, finit par se desserrer.

Dans la situation où il n'y a pas de poteau devant le parc ou autres lieux dans lesquels l'entrée des animaux est interdite, il arrive bien souvent que les personnes promenant leur animal domestique se privent en renonçant à y entrer. D'autres personnes, bravant les interdits, entrent tout de même dans le commerce ou dans le parc avec leur animal, sans se soucier notamment de la propreté du site ou des autres personnes éventuellement gênées de la présence de l'animal.

La présente invention permet aux personnes accompagnées d'un animal, d'une part de l'attacher devant le lieu où sa présence n'est pas désirée, et d'autre part de ne pas avoir besoin d'utiliser un élément supplémentaire à celui de la poignée de la laisse pour attacher cette dernière au dispositif. La présente invention peut être réalisée de telle manière qu'elle n'abîme pas l'élément sur laquelle elle se fixe.

A cet effet, le dispositif selon l'invention comporte un élément de retenue de la poignée de laisse d'animal, la poignée s'accrochant directement à l'élément de retenu (sans avoir recours à un ustensile supplémentaire) et des moyens de fixation de cet élément de retenue sur une paroi fixe notamment lisse et verticale.

On comprendra par paroi fixe une paroi d'immeuble telle qu'un mur ou une vitrine de commerce.

Avantageusement, l'élément de retenue constitue un levier de commande des moyens de fixation par basculement d'une position où les moyens de fixation adhèrent à la paroi fixe à une position où les moyens de fixation sont libérés de la paroi fixe.

Selon un mode de réalisation avantageux de l'invention, l'élément de retenue comporte un crochet réalisé par un tube en colimaçon. De cette manière, la poignée de la laisse d'un animal est aisément engageable autour de l'extrémité du crochet sans avoir à utiliser un autre ustensile tel qu'un mousqueton.

Avantageusement, les moyens de fixation de l'élément de retenue se fixent par dépression sur une paroi lisse. Dans le cadre de ce mode de réalisation, ils sont essentiellement constitués par une ventouse associée à un mécanisme de commande par basculement d'un levier, le mécanisme comportant préférentiellement un verrou de blocage du mouvement de basculement du levier.

La fixation de l'élément de retenue au moyen de la ventouse permet de placer le dispositif sur la paroi préférentiellement lisse et de le libérer de la paroi autant de fois que souhaité et ce, sans dénaturer la paroi qui supporte le dispositif.

La présente invention peut également être réalisée de manière à ce qu'elle puisse également présenter un panneau d'informations tel qu'un panneau publicitaire ou un panneau présentant, par exemple, les menus proposés par un restaurant. Pour ce faire, et dans le cadre de ce mode de réalisation de l'invention, les moyens de fixation et l'élément de retenue de la poignée de la laisse d'un animal sont tous deux fixés de part et d'autre d'une plaque munie de moyens de fixation d'un panneau d'informations.

Ainsi conçu, le dispositif suivant l'invention se prête particulièrement bien à des situations où la paroi en question est celle d'un mur vertical lisse, ce qui est notamment le cas des vitrines de commerces. Le dispositif suivant l'invention peut aussi servir à attacher la laisse d'un animal plus ou moins volumineux et plus ou moins lourd. On peut aisément déterminer en conséquence les dimensions des différents éléments constituant le dispositif, ainsi que la force de succion à exercer par la ventouse sur la paroi réceptrice sous l'action de son mécanisme de commande et l'efficacité d'adhérence sur cette paroi qui en résulte.

Dans ses modes de réalisation préférés, le dispositif suivant l'invention présente différentes caractéristiques secondaires qui, tout en répondant aux objectifs qui ont déjà été signalés, visent aussi à assurer une grande sécurité de fonctionnement, maintenant l'élément de retenue (ou le crochet) dans des positions stables et précises, tandis que d'autres objectifs ont plutôt pour finalité de satisfaire à des besoins d'ordre esthétique. Là aussi, l'invention peut se prêter à de nombreuses formes particulières de réalisation, différant les unes des autres en fonction des conditions d'emploi du dispositif, les besoins pouvant varier dans les détails technologiques entre, par exemple, des dispositifs à fixer à l'extérieur sur des portes peintes ou vitrées et des dispositifs à fixer sur des placards fixes exposés aux intempéries. On aura alors intérêt notamment à prendre en compte l'indice de rugosité de la surface réceptrice ainsi que le fait qu'elle est plus ou moins exposée à l'humidité.

Pour faciliter la compréhension de ses caractéristiques et de leurs avantages, on se placera spécifiquement dans le cadre des applications préférées de l'invention où ce dispositif est destiné à venir se fixer à plat contre une paroi lisse verticale à laquelle il adhère par une ventouse qu'il comporte, et à résister aux diverses forces exercées par un animal qui y est attaché ainsi qu'à maintenir un panneau d'informations. Mais il doit être entendu qu'un tel dispositif, sous le même modèle ou sous un modèle sensiblement différent, peut être utilisé dans des conditions très différentes sans sortir pour autant du cadre de l'invention.

Selon un mode de réalisation préféré de l'invention qui sera plus amplement décrit par la suite, les moyens de fixation du panneau se présentent sous la forme de deux sillons en forme de U, avantageusement parallèles et en regard l'un de l'autre, réalisés par repli vers le centre des extrémités de deux côtés parallèles de la plaque sur laquelle l'élément de retenue et ses moyens de fixation sur une paroi notamment lisse sont montés.

De cette manière, et selon ce mode de réalisation avantageux, les deux sillons forment deux glissières pour deux bords avantageusement parallèles d'un panneau d'informations. Plus précisément, les extrémités repliées de la plaque viennent entourer les deux bords avantageusement parallèles du panneau après y avoir été glissés. Pour ce faire, la largeur des sillons est avantageusement de dimension au moins égale au jeu près à l'épaisseur du panneau d'informations.

Afin d'empêcher les bords du panneau de glisser dans les sillons formant glissières sous l'effet de la gravitation, deux cales de maintien du panneau sont avantageusement prévues sur la plaque à l'extrémité des sillons.

En ce qui concerne la ventouse, elle peut être de constitution courante. Ainsi, elle est en général essentiellement constituée d'un élément en matière souple, du type élastomère, qui présente une forme évasée de coupelle, allant en s'évasant en s'écartant de la plaque et respectant une symétrie de révolution, avantageusement de contour circulaire. Il s'agit plus particulièrement d'une forme tronconique de cône droit dont l'angle au sommet est ouvert à plus de 90 degrés. La ventouse est avantageusement une ventouse de vitrier.

Comme il a été précédemment exposé, le mécanisme de commande de la ventouse comporte un levier de commande basculant et un verrou de blocage du mouvement de basculement du levier. Selon un mode de réalisation préféré de l'invention, la ventouse est manoeuvrée par une came formée sur le levier par traction d'une tige de commande solidaire d'un disque rigide que comprend la ventouse. Pour ce faire, la tige traverse la plaque du dispositif. L'une de ses extrémités est reliée au disque avantageusement compris dans la ventouse et l'autre extrémité est reliée à la came précitée.

Selon un mode de réalisation préféré de l'invention, la came étant formée sur le levier, lorsque l'on actionne le levier par basculement autour d'un axe parallèle au plan de la plaque, la came est également entraînée en rotation autour de ce même axe et tire sur la tige en prenant appui sur la plaque.

Lorsque la tige est tirée au maximum, la ventouse adhère à la paroi lisse et le dispositif y est ainsi maintenu.

Concernant le verrou, et selon un mode de réalisation préféré de l'invention, il se trouve préférentiellement disposé sous le levier dans la came. Le verrou se compose notamment d'une tige cylindrique munie d'un ressort travaillant en compression, venant buter contre une bague solidaire de la tige. La partie de la tige du verrou qui est délimitée par l'extrémité de la tige et la bague sera appelée partie active du verrou.

Pour permettre de maintenir le dispositif en position fixe et d'assurer que le levier ne bouge plus, la came comporte un espace creux dans lequel la tige de la ventouse est montée mobile, et la tige de la ventouse présente un alésage dans lequel l'extrémité active de la tige du verrou s'insère lorsqu'il y est poussé par le ressort compressé cherchant à récupérer sa longueur initiale. De cette manière, et grâce au travail du ressort, la partie active du verrou ne peut sortir de l'alésage ménagé dans la tige sans que quelqu'un tire sur le verrou pour compresser le ressort. En effet, lorsque quelqu'un tire sur la tige du verrou, il fait sortir de l'alésage la partie active de la tige du verrou en comprimant le ressort et le levier peut alors être bougé autour de son axe de rotation.

Afin de protéger la ventouse des agressions extérieure, la plaque présente le long des bords de sa face interne un rebord en saillie. Avantageusement, la hauteur du rebord en saillie avoisine la hauteur de la ventouse de manière à bien la protéger des diverses agressions extérieures dont notamment celles du chien.

Par ses différentes caractéristiques, telles qu'elles ont été ci-avant ou qu'elles seront plus loin définies, décrites et illustrées, et telles qu'elles peuvent être avantageusement appliquées dans la pratique industrielle, l'invention permet notamment d'offrir aux commerçants un dispositif amovible qui ne détériore pas l'extérieur de leur vitrine et qui leur permet de mettre à la disposition de leurs clients des moyens pour attacher leur animal sans que ces derniers aient à se munir, par exemple, d'un mousqueton. Selon des caractéristiques secondaires de l'invention, le dispositif permet également de présenter un panneau d'informations tel qu'un panneau publicitaire.

L'invention sera maintenant plus complètement décrite dans le cadre de caractéristiques préférées et de leurs avantages, en faisant référence aux figures 1 à 3 dans lesquelles :
- la figure 1 représente un mode de réalisation préféré du dispositif selon l'invention en vue de profil ;
- la figure 2 illustre le dispositif de la figure 1 en vue de coupe, le verrou du dispositif étant tiré et la ventouse n'adhérant pas à une paroi;
- et la figure 3 montre le dispositif de la figure 1 en vue de coupe, le levier du dispositif étant bloqué en position par le verrou et la ventouse adhérant à une paroi.

Comme il ressort des figures, le mode de réalisation préféré de l'invention qui va être décrit comporte des moyens pour supporter un panneau d'information.

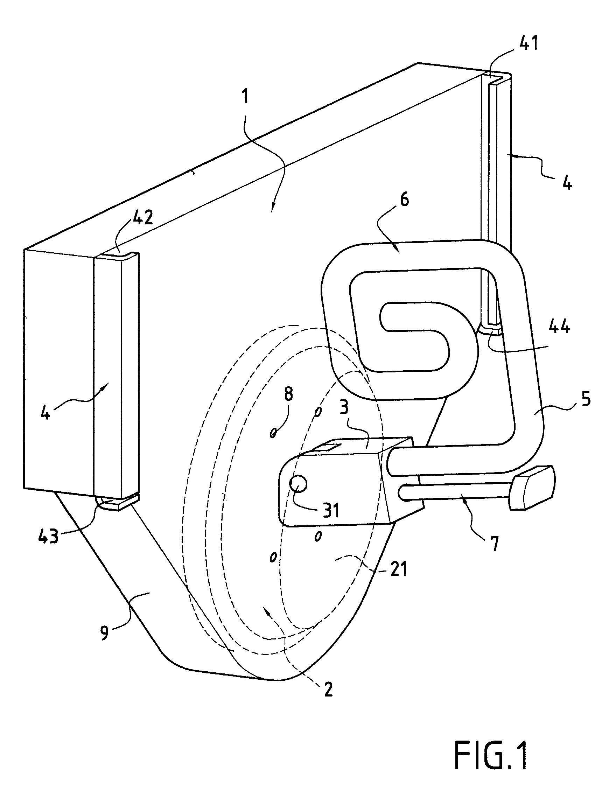

Comme il ressort de la figure 1 , le dispositif de l'invention présente notamment une plaque 1 comportant des moyens de fixation 2 par dépression sur une paroi lisse, un mécanisme de commande des moyens de fixation 2 à levier 5 et à verrou 7, ainsi que des moyens de fixation 4 d'un panneau. Selon l'invention et tel qu'il est illustré en figure 1, le levier 5 comporte des moyens 6 pour attacher directement (sans autre ustensile) la poignée de la laisse d'un animal.

La plaque 1 présente une face externe 11 contre laquelle un panneau est fixé par les moyens de fixation 4, et une face interne 12 qui est à disposer en regard de la paroi lisse et qui présente notamment les moyens de fixation 2 sur une paroi lisse.

Dans le cadre de ce mode de réalisation préféré, les moyens de fixation 2 par dépression comportent une ventouse 21. La ventouse 21 est constituée d'un élément en matière souple, du type élastomère, qui présente une forme évasée de coupelle, allant en s'évasant en s'écartant de la plaque et respectant une symétrie de révolution. Elle est de contour circulaire, plus particulièrement de forme tronconique de cône droit dont l'angle au sommet est ouvert à plus de 90 degrés.

Dans le cadre de ce mode de réalisation préféré, il s'agit d'une ventouse de vitrier.

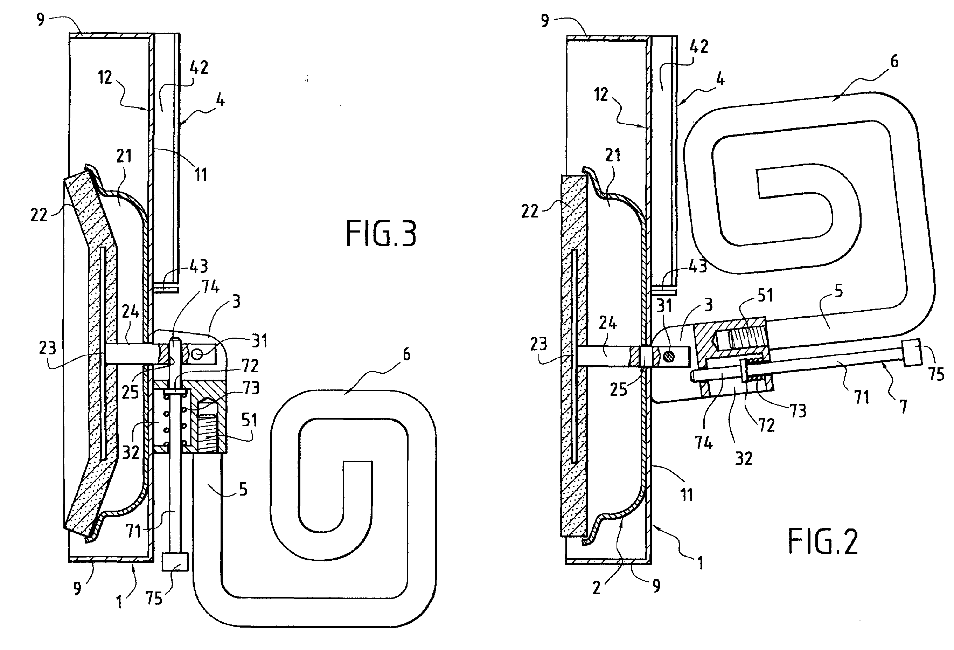

Comme on peut le voir notamment sur les figures 2 et 3, la ventouse 21 comporte un tapis de fond 22 qui enferme un disque 23. Le disque 23 est relié à une tige 24 traversant la ventouse 21. La tige 24 comporte un alésage 25, dont l'utilité sera détaillée ultérieurement. La tige 24 traverse également la plaque 1 et est relié par une traverse 31 à une came 3 formée à la base du levier 5 du mécanisme de commande des moyens de fixation 2, et plus particulièrement de la ventouse 21.

Comme on peut le voir plus particulièrement sur les figures 2 et 3, le levier 5 est relié à la came 3 par une extrémité 51 engagée puis fixée dans un évidement ménagé à cet effet dans la came 3.

La came 3 est disposée contre la face externe 11 de la plaque 1 de manière à prendre appui sur la face externe 11 pour tirer sur la tige 24 lorsque le levier 5 est actionné.

Le levier 5 et la came 3 sont montés mobiles en rotation autour de l'axe la traverse 31 qui relie la came 3 à la tige 24. On comprendra donc par actionnement du levier 5 le fait de déplacer le levier en rotation autour de l'axe de la traverse 31 d'une position haute à une position basse. On comprendra par position haute du levier la position dans laquelle son axe se trouve perpendiculaire à la plaque 1 et dans laquelle le dispositif selon l'invention n'est pas fixé à une paroi lisse. On comprendra par position basse la position du levier dans laquelle son axe se trouve parallèle à la plaque 1 et dans laquelle le dispositif est fixé à une paroi lisse.

La came 3 du dispositif comporte également un logement 32 spécialement ménagé pour recevoir le verrou 7. Dans le cadre de ce mode de réalisation préféré, le logement 32 est avantageusement ménagé au voisinage du levier 5 pour réduire l'encombrement de l'ensemble verrou 7 / levier 5 sur la came 3.

Le logement 32 se présente sous la forme d'un cylindre creux dont les deux parois parallèles sont percées au niveau de l'axe du cylindre creux. Le cylindre creux présente ainsi deux perçages.

Le verrou 7 se présente sous la forme d'une tige 71 dont l'une des extrémités comporte un élément de préhension 75 permettant de tirer sur le verrou. Cette extrémité de la tige du verrou sera appelée extrémité de préhension de la tige 71. L'autre extrémité de la tige 71 sera appelée extrémité active 75 de la tige car c'est cette extrémité qui permet le blocage du mouvement de rotation du levier 5. Au commencement de l'extrémité active 75 de la tige 71, se dresse une bague d'arrêt 72 tout autour du pourtour circulaire de la tige 71. Autrement dit, la bague d'arrêt 72 est solidaire de la tige 71 et se trouve en saillie de son pourtour circulaire.

Le verrou 7 comprend également un ressort 73 qui travaille en compression. On entendra par ressort qui travaille en compression un ressort qui reprend sa longueur ordinaire après avoir été compressé.

La tige 71 du verrou traverse les deux perçages du logement 32 de réception du verrou, ainsi que le ressort 73 enfermé dans le logement 32. La bague d'arrêt 72 se trouve positionnée dans le logement 32, contre l'une des deux parois internes du logement 32. La tige 71 présente un diamètre légèrement inférieur à celui des perçages du logement 32 et est ainsi montée mobile en translation selon son axe dans le logement 32, en étant toutefois arrêtée dans sa course quand la bague 72 rencontre l'une des parois internes du logement 32. Le diamètre de la bague 72 est supérieur à celui du ressort 73 de sorte que, lorsque la tige est tirée vers l'extérieure du logement, la bague comprime le ressort, et de sorte que, lorsque l'on cesse de tirer sur la tige, le ressort pousse la bague dans le logement (faisant ainsi rentrer la tige dans le logement 32) jusqu'à ce qu'elle vienne en contact avec la paroi interne du logement 32.

Lorsque le levier 5 est en position haute, et que le dispositif n'est pas fixé contre une paroi lisse, l'extrémité active 75 de la tige 72 du verrou 7 vient buter contre la paroi interne de la came 3. Afin de maintenir en position basse le levier lorsque le dispositif est fixé contre la paroi lisse au moyen de la ventouse, l'extrémité active 75 de la tige 71 du verrou est insérée dans l'alésage 25 de la tige 24 sous l'action du ressort 73. Le levier est ainsi bloqué en position basse. Pour pouvoir de nouveau basculer le levier en position haute, il faut tirer sur la tige 71 pour comprimer le ressort 73 et faire sortir de l'alésage 25 l'extrémité active 75 de la tige 71.

Ainsi, l'alésage 25 que comporte la tige 24 des moyens de fixation 2 du dispositif selon l'invention présente un diamètre légèrement supérieur à celui de l'extrémité active 75 de la tige 71 du verrou 7.

Afin de pouvoir y présenter un panneau publicitaire, et tel qu'il a été précisé précédemment, la plaque 1 du dispositif selon l'invention comporte des moyens de fixation 4.

Les moyens de fixation 4 d'un panneau sur la plaque 1 comportent deux sillons 41 et 42 en forme de U (figure 1) réalisés par repli de l'extrémité de deux bords parallèles de la plaque 1 vers l'intérieur de la plaque.

Avantageusement les sillons présentent une largeur légèrement supérieure à l'épaisseur d'un panneau à présenter sur le dispositif de manière à ce que deux bords du panneau puissent être glissés dans les deux sillons 42 et 43.

Pour que le panneau ne tombe pas sous l'effet de la gravitation, la plaque 1 comporte également deux cales 43 et 44 placées aux extrémités inférieures des deux sillons 42 et 43 sur sa face externe 11. Le bord inférieur du panneau est ainsi retenu par les cales 43 et 44.

Afin de protéger la ventouse 21 des agressions extérieures telles que, par exemple, les intempéries, la plaque 1 comporte une collerette périphérique, ou rebord 9, en saillie de sa face interne 12 (figure 1). Dans le même souci de préserver la ventouse 21, la plaque 1 du dispositif présente quatre ouvertures d'aération 8 (figure 1).

Le levier 5 du dispositif comprend des moyens pour attacher directement (sans avoir recours à un ustensile supplémentaire) la poignée d'une laisser d'un animal. Selon le mode de réalisation représenté sur les figures, les moyens pour attacher la laisse d'un animal comprennent un crochet réalisé par un tube en colimaçon 6, solidaire du levier 5. Il est réalisé en prolongement du levier 5 comme on peut le voir sur les figures 1, 2 et 3.

De cette manière, lorsque le levier est bloqué en position basse par le verrou 7, le tube en colimaçon 6 est lui aussi fixé en position basse. Ainsi, il est fort peu probable qu'un animal tirant sur sa laisse arrive à dégager la poignée de cette dernière soigneusement insérée autour du tube.

Le mode de fonctionnement du dispositif selon ce mode de réalisation préféré va maintenant être présenté.

Lorsque le dispositif selon l'invention n'est pas encore fixé sur une paroi lisse, le levier 5 est en position haute et l'extrémité active 74 du verrou 7 bute contre la paroi interne de la came 3.

L'utilisateur fixe le dispositif en plaçant dans un premier temps la ventouse 21 contre la paroi lisse qu'il a choisie. Puis, il tire sur le verrou 7 pour que l'extrémité active 74 de ce dernier ne viennent plus buter contre la paroi interne de la came 3.

L'utilisateur bascule alors le levier 7 en position basse. En réalisant cette action, la came 3 effectue une rotation autour de l'axe de la traverse 31 et tire sur la tige 24. La tige 24 écarte le disque de fond 23 de la ventouse 21 de la paroi lisse et crée une dépression entre la paroi lisse et le fond de la ventouse 21.

Lorsque le levier se trouve en position basse, l'utilisateur relâche l'extrémité de préhension 75 du verrou 7 et le ressort, tendant à reprendre sa longueur initiale, fait entrer la tige 71 du verrou dans le logement 32. De même, l'extrémité active 74 de la tige 71 du verrou rentre alors dans l'alésage 25 de la tige 24 sous l'action du ressort 73. Le levier 5 est alors bloqué en position basse et la ventouse adhère à la paroi lisse.

L'utilisateur peut alors mettre en place son panneau publicitaire en faisant glisser les bords latéraux de ce dernier dans les sillons 41 et 42 de la plaque 1 jusqu'à ce que le bord inférieur du panneau viennent buter contre les cale de retenue 43 et 44. Pour accrocher son animal, l'utilisateur enfile la poignée de la laisse de ce dernier autour du tube en colimaçon 6.

Pour retirer le dispositif de la paroi lisse, par exemple en fin de journée lorsqu'un commerçant ferme son magasin, il enlève le panneau en faisant glisser les bords de ce dernier dans les sillons 41 et 42. Puis, il tire sur le verrou 7 par son extrémité de préhension 75 pour dégager de l'alésage 25 l'extrémité active de la tige 71 du verrou 7. Le commerçant, ou plus généralement l'utilisateur, peut alors basculer en position haute le levier 5 du dispositif. En effectuant ce geste, la tige 24 est libérée de la traction qui était exercée sur elle et le disque de fond 23 de la ventouse se rapproche de la paroi lisse jusqu'à la toucher de nouveau. Il n'existe alors plus aucune dépression entre le disque de fond de la ventouse et la paroi lisse. La ventouse se décroche ainsi facilement de la paroi lisse.

La description qui précède explique clairement comment l'invention permet d'atteindre les objectifs qu'elle s'est fixés. Il ressort néanmoins de ce qui précède que l'invention n'est pas limitée aux modes de mise en oeuvre qui ont été spécifiquement décrits et représentés sur les figures.

En effet, l'invention pourrait uniquement comporter un crochet, tel que celui représenté sur les figures, associé à des moyens de fixation par exemple sur un mur.

Le levier pourrait présenter également d'autres moyens permettant d'attacher la poignée d'une laisse d'un animal. Dans le cadre d'un autre mode de réalisation du dispositif selon l'invention, les moyens de retenue de la poignée de la laisse d'un animal pourraient consister en un mousqueton.

Dans le cadre du mode de réalisation préféré décrit précédemment, la tige 24 pourrait être de longueur réglable, ce qui pourrait notamment être obtenu par un système de vis-écrou entre deux parties coaxiales de la tige qui sont respectivement solidaires l'une d'un axe pivot autour duquel le levier bascule la came, et l'autre formant un tirant qui est solidaire du fond de la ventouse. Ces dispositions permettraient de régler la force de succion de la ventouse en fonctionnement en augmentant plus ou moins la longueur de course entre le fond de la ventouse et la came du levier.

Une autre manière de pouvoir régler l'effet de ventouse consisterait à adjoindre à la plaque principale une bague intermédiaire s'intercalant entre la face externe de la plaque et le levier pour former le siège de la came et à prévoir, par réglage de son épaisseur ou par vissage dans l'épaisseur de la plaque, de pouvoir éloigner plus ou moins ce siège de la plaque, réglant ainsi la distance au repos entre la plaque et la ventouse.

Par ailleurs, d'autres formes de plaque pourraient être envisagées en fonction de la forme du panneau.

## Revendications

1. Dispositif pour attacher un animal comportant un élément de retenue (6) d'une poignée de laisse d'animal, ladite poignée s'accrochant directement audit élément de retenue (6), et des moyens de fixation (2) dudit élément de retenue (6) sur une paroi fixe, notamment lisse et verticale.

2. Dispositif selon la revendication 1 , **caractérisé en ce que** ledit élément de retenue (6) constitue un levier de commande desdits moyens de fixation (2) par basculement d'une position où lesdits moyens de fixation (2) adhèrent à la paroi fixe à une position où lesdits moyens de fixation (6) sont libérés de la paroi fixe.

3. Dispositif selon la revendication 1 ou 2, **caractérisé en ce que** ledit élément de retenue comporte un crochet (6) réalisé par un tube en colimaçon autour duquel ladite poignée est engageable.

4. Dispositif selon la revendication 1,2 ou 3, **caractérisé en ce que** lesdits moyens de fixation (2) sont associés à un mécanisme de commande par basculement d'un levier (5), le mécanisme comportant préférentiellement un verrou (7) de blocage du mouvement de basculement dudit levier (5).

5. Dispositif selon la revendication 4, **caractérisé en ce que** lesdits moyens de fixation (2) se fixent par dépression sur une paroi lisse, et qu'ils sont essentiellement constitués par une ventouse (21) manoeuvrée par une came (3) formée sur ledit levier (5) par traction d'une tige (24) de commande solidaire d'un disque rigide (23) que comprend ladite ventouse (21).

6. Dispositif selon la revendication 4 ou 5, **caractérisé en ce que** ledit verrou (7) se compose notamment d'une tige cylindrique (71) munie d'un ressort (73) travaillant en compression, venant buter contre une bague (72) solidaire de ladite tige (71).

7. Dispositif selon l'une quelconque des revendications précédentes, **caractérisé en ce que** lesdits moyens de fixation (2) et ledit élément de retenue (6) de la poignée de la laisse d'un animal sont tous deux fixés de part et d'autre d'une plaque (4) munie de moyens de fixation (41, 42, 43, 44) d'un panneau d'informations.

8. Dispositif selon la revendication 7, **caractérisé en ce que** lesdits moyens de fixation du panneau se présentent sous la forme de deux sillons (41, 42) en forme de U, avantageusement parallèles et en regard l'un de l'autre, formant glissières pour le bord dudit panneau d'information, lesdits sillons (41, 42) étant réalisés par repli vers le centre des extrémités de deux côtés parallèles de ladite plaque (4) sur laquelle ledit élément de retenue (6) et ses moyens de fixation (2) sont montés, et **en ce que** deux cales (43, 44) de maintien du panneau sont avantageusement prévues sur ladite plaque (4) à l'extrémité desdits sillons (41, 42).

9. Dispositif selon l'une quelconque des revendications 7 ou 8, **caractérisé en ce que** ladite plaque (4) présente au moins un rebord (9) dont la hauteur avoisine la hauteur de ladite ventouse (21).
